# EUROPÄISCHE PATENTSCHRIFT

(11) **EP 3 391 356 B1**
(45) Veröffentlichungstag und Bekanntmachung des Hinweises auf die Patenterteilung: **02.10.2019**
(21) Anmeldenummer: 16801432.2
(22) Anmeldetag: 22.11.2016
(51) Int. Cl.: G08G 1/01, G08G 1/0962, G08G 1/14, G08G 1/127, G08G 1/04

(54) **VERFAHREN ZUR ERKENNUNG VON FALSCHPARKERN**
METHOD FOR DETECTING INCORRECTLY PARKED VEHICLES
PROCÉDÉ DE DÉTECTION DE MAUVAIS STATIONNEMENT

(30) Priorität: 16.12.2015 DE 102015225413
(43) Veröffentlichungstag der Anmeldung: 24.10.2018
(73) Patentinhaber: Robert Bosch GmbH, 70442 Stuttgart (DE)
(72) Erfinder: MAYER, Philipp, 70176 Stuttgart (DE); ABELING, Peter Christian, 30171 Hannover (DE)
(86) Internationale Anmeldenummer: PCT/EP2016/078468
(87) Internationale Veröffentlichungsnummer: WO 2017/102267

(56) Entgegenhaltungen:
- EP-A2- 1 792 776
- DE-A1-102013 003 683
- JP-A- 2010 039 825
- US-A1- 2013 021 171
- US-A1- 2013 265 419
- US-A1- 2013 266 188

## Beschreibung

Die Erfindung betrifft ein Verfahren zur Erkennung von Falschparkern, die über eine gewisse Zeit in Bereichen stehen an denen dauerhaft das Parken nicht erlaubt ist (z.B. einer Hofeinfahrt, in einer Parkverbotszone, etc.). Hierbei wird eine digitale Parkraumkarte verwendet, die Informationen über Parkflächen und Nicht-Parkflächen enthält.

### Stand der Technik

Park- und Fahrerassistenzfunktionen basierend auf distanzbasierten Messverfahren (z.B. Ultraschallsensoren, Radar) sind aus dem Stand der Technik bekannt. Parklücken können mittels verschiedener Sensoren vermessen und dem Fahrer als Parkmöglichkeit angeboten werden, wodurch eine teil- oder voll automatisierte Einparkassistenzfunktion den Fahrer beim Einparken in eine freie Parklücke unterstützt.

Das Übertragen von solchen detektierten Parklücken an einen Server ist ebenfalls aus dem Stand der Technik bekannt, beispielsweise aus DE 10 2004 062 021 A1, DE 10 2009 028 024 A1 und DE 10 2008 028 550 A1. Ferner sind Verfahren bekannt, die das Lernen von Parkraumkarten zur Unterscheidung von Einfahrten und gültigen Parkflächen aus den übertragenen Parklückendaten vorsehen. Diese Verfahren nutzen Daten von vielen verschiedenen Fahrzeugen und Vorbeifahrten durch eine Straße und werden daher üblicherweise auf einem Server umgesetzt.

Die DE 10 2013 003 683 A1 offenbart ein Fahrerassistenzsystem zur Unterstützung eines Fahrers eines Kraftfahrzeuges bei der Kategorisierung einer freien Fläche eines Straßenverkehrsnetzes als nutzbarer Parkplatz, mit einem Umgebungserfassungssystems zur Erfassung von Umgebungsdaten und einem Auswertemittel zur Auswertung der Umgebungsdaten. Dabei ist das Auswertemittel derart ausgeführt und eingerichtet, dass auf Basis der Umgebungsdaten ermittelt wird, ob die Fläche derart angeordnet ist, dass eine tatsächliche Benutzung der Fläche als Parkplatz für das Kraftfahrzeug eine Fläche als Parkplatz für das Kraftfahrzeug eine Zufahrt blockieren oder Zumindest behindern würde. Somit ist es möglich eine Fläche eines Straßenverkehrsnetzes, die von dem Umgebungserfassungssystem des Kraftfahrzeugs in der Umgebung des Kraftfahrzeuges erfasst wird, als verkehrsregelgerechten Parkplatz oder als nicht verkehrsregelgerechten Parkplatz zu kategorisieren. Die Begriffe "Zufahrt", "Ausfahrt" und "Fußgängerübergang" werden vorliegend breit verstanden. Die Begriffe "Zu-/Ausfahrt" umfassen insbesondere Fahrbahn- oder Wegeinmündungen, Garagen- Ein- oder Ausfahrten, Zu- oder Ausfahrten für Einsatzfahrzeuge und Wirtschaftswege. Zudem offenbart die DE 10 2013 003 683 A1 ein Umgebungserfassungssystem, bevorzugt ein Kamerasystem (optischer Sensor) und/oder einen Laserscanner und/oder einen Radarsensor und/oder einen Ultraschallsensor auf, die bevorzugt die Umgebungsdaten einer seitlichen und seitlich vorausliegenden Umgebung des Kraftfahrzeugs erfasst. Weiter wird ein Auswertemittelsystem offenbart, welches bevorzugt eine Empfangseinheit zum Empfang von Umgebungsdaten umfasst, die von einem anderen Fahrzeug erfasst wurden, mittels Car-to-Car-Kommunikation, und/oder von Umgebungsdaten, die von einer stationären Verkehrsinfrastruktureinrichtung erfasst wurden, mittels Car-to-Infrastructure-Kommunikation. So können bspw. erfasste Umgebungsdaten mittels C2C-Kommunkation an das eigene Kraftfahrzeug übermittelt werden, um zur Verifikation und/oder Beschleunigung des Prozesses der Kategorisierung der Fläche durch das Auswertemittel zu dienen. Weiter offenbart die DE 10 2013 003 683 A1 eine Weiterbildung des Fahrerassistenzsystems, in dem die aktuelle Position des Kraftfahrzeuges bereitgestellt wird. Zudem offenbart die DE 10 2013 003 683 A1 ein Auswahlmittel mit Speichereinheit, auf der Daten zur ermittelten Kategorie der Fläche und deren Position gespeichert werden, damit diese Auswerteergebnisse für eine spätere Nutzung zur Verfügung stehen.

Aus der DE 10 2004 062 021 A1 ist bekannt, dass ein Verkehrsteilnehmer mit einer Einrichtung zur Vermessung von Parklücken, welcher bspw. mit sechs Ultraschallsensoren im Frontbereich und sechs Ultraschallsensoren im Rückbereich ausgerüstet ist, um den Parkraum vor dem Einparken zu vermessen und während des Einparkens zu überwachen. Während der Vorbeifahrt an einer Parklücke werden Daten mit den Seitensensoren erfasst. Mittels des Parklücken-Steuergerätes wird die Berechnung der Länge einer Parklücke durchgeführt. Die vom Navigationsgerät zur Verfügung gestellten Informationen werden vom Parklücken-Steuergerät genutzt, um die Gültigkeit der ermittelten Parklücke zu bewerten (Ausblendung von Parkverbotszonen, etc.). Die gemessenen Parklücken werden eine gewisse Zeit im Parklücken-Steuergerät oder im Navigationsgerät 4 zwischengespeichert und dann gesammelt en bloc zur Zentrale bzw. Server über bspw. GSM oder UMT-Kommunikationsverbindungen übertragen.

Aus dem Stand der Technik sind demnach Lösungen bekannt, bei denen mögliche Parkflächen kategorisiert werden in nutzbare Parkfläche und Nichtnutzbare Parkflächen um den Fahrer präventiv davon abzuhalten Ein- und Ausfahrten, Fußgängerüberwege etc. zu blockieren. Das Dokument JP2010 039825 offenbart ein Verfahren nach dem Oberbegriff des Anspruchs 1.

### Offenbarung der Erfindung

Gemäß der Erfindung wird ein Verfahren zur Erkennung von falsch geparkten Fahrzeugen vorgeschlagen, wobei Informationen über verfügbare Parkflächen und nicht zum Parken zur Verfügung stehende Flächen in Form einer digitalen Parkraumkarte zur Verfügung gestellt werden. Die Informationen über nicht zum Parken zur Verfügung stehende Flächen umfassen Koordinaten, insbesondere GPS-Koordinaten, und eine erwartete Länge der Fläche. Erfindungsgemäß ist vorgesehen, dass die Länge einer nicht zum Parken zur Verfügung stehende Fläche durch ein parkplatzsuchendes Fahrzeug detektiert wird und bei einer Abweichung der detektierten Länge von einer erwarteten Länge ein falsch parkendes Fahrzeug erkannt wird.

Die Erfindung ermöglicht die Erkennung von Falschparkern, die über eine gewisse Zeit in Bereichen stehen an denen dauerhaft das Parken nicht erlaubt ist (z.B. einer Hofeinfahrt, Parkverbotszone, etc.) demnach durch Vermessen der Länge des freizuhaltenden Bereichs. Weicht diese gemessene Länge von der erwarteten Länge ab, so ist dies ein Hinweis, dass ein Objekt, wahrscheinlich ein Fahrzeug, die nicht zum Parken zur Verfügung stehende Fläche besetzt und damit falsch parkt.

Die Erfindung ermöglicht somit vorteilhaft eine Erkennung von Falschparkern in automatisierter Form. Eine automatisierte Meldung von Falschparkern z.B. an Ordnungsämter inkl. detaillierter Ortsinformationen wird damit ermöglicht, so dass Verkehrsbehinderungen durch falsch parkende Fahrzeuge schnell beseitigt werden können. Wenn ein Fahrer aus Versehen an einer unerlaubten Stelle parkt, kann er von einem System darauf hingewiesen werden, den Platz wieder zu verlassen.

Als Basis für das erfindungsgemäße Verfahren dient eine digitale Parkraumkarte. Diese Parkraumkarte beinhaltet sowohl Informationen über Parkflächen auf denen Fahrzeuge parken dürfen als auch über Nicht-Parkflächen auf denen Parken nicht erlaubt ist wie z.B. eine Hofeinfahrt oder eine Parkverbotszone. Des Weiteren beinhaltet diese Parkraumkarte auch Eigenschaften der Parkflächen und Nicht-Parkflächen wie die Länge des Bereiches, die Tiefe des Bereiches, Vorhanden-/Nichtvorhandensein eines Bordsteins, usw.

Bevorzugt wird jeder nicht zum Parken zur Verfügung stehende Fläche auf der digitalen Parkraumkarte jeweils ein Mittelwert und ein Offset der erwarteten Länge zugeordnet.

Das erfindungsgemäße Verfahren für die Erkennung von Falschparkern umfasst insbesondere zwei auf dem zuvor beschriebenen Prinzip beruhende Methoden. Welche der beidem beschriebenen Methoden zum Einsatz kommt, ist abhängig von der jeweiligen Situation:
- Ein Fahrzeug detektiert bei einer oder mehreren Vorbeifahrt(en) eine deutlich kürzere Parklückenlänge als die gelernte und damit erwartete Länge einer Nicht-Parkfläche. Bevorzugt wird demnach ein falsch geparktes Fahrzeug erkannt, wenn mindestens ein parkplatzsuchendes Fahrzeug bei einer oder mehreren Vorbeifahrten an einer nicht zum Parken zur Verfügung stehenden Fläche eine kürzere Länge als der zugeordnete Mittelwert der erwarteten Länge abzüglich des Offsets detektiert. Je öfter der Falschparker durch eine Messung einer entsprechend kürzeren Länge verifiziert wird, desto höher ist die Sicherheit, dass es sich tatsächlich um einen Falschparker handelt. Besonders bevorzugt wird ein falsch geparktes Fahrzeug erkannt, wenn mindestens zwei parkplatzsuchende Fahrzeuge unabhängig voneinander bei ein oder mehreren Vorbeifahrt an der nicht zum Parken zur Verfügung stehenden Fläche eine kürzere Länge als der zugeordnete Mittelwert der erwarteten Länge abzüglich des Offsets detektieren.
- Ein Fahrzeug detektiert bei plausibler Vorbeifahrt an einer Nicht-Parkfläche einmalig oder mehrfach keine Lücke an erwarteter Stelle. Bevorzugt wird demnach ein falsch geparktes Fahrzeug erkannt, wenn ein parkplatzsuchendes Fahrzeug bei einer Vorbeifahrt an einer nicht zum Parken zur Verfügung stehenden Fläche keine Lücke detektiert.

In einer bevorzugten Ausführung des Verfahrens kann nach der Erkennung eines falsch geparkten Fahrzeugs eine Meldung von dem parkplatzsuchenden Fahrzeug an eine zentrale Recheneinheit und/oder an ein Ordnungsamt erfolgen, wobei zumindest die Koordinaten der belegten, nicht zum Parken zur Verfügung stehende Fläche übermittelt werden. Es ist auch denkbar, den Halter eines falsch parkenden Fahrzeugs, sobald es erkannt wurde durch entsprechende Kommunikationsmittel direkt zu informieren, damit er das Fahrzeug entfernen kann.

In einer weiteren bevorzugten Ausführung des Verfahrens kann eine Warnung an den Fahrer eines parkplatzsuchenden Fahrzeugs ausgegeben werden, wenn das Fahrzeug auf einer nicht zum Parken zur Verfügung stehende Fläche geparkt wird oder geparkt werden soll. Dies schützt den Fahrer vor einem Verstoß gegen das Verkehrsrecht und stellt sicher, dass wichtige Zufahrten frei bleiben.

Die digitale Parkraumkarte umfasst bevorzugt Informationen, die durch im Verkehr befindliche parkplatzausforschende Fahrzeuge erfasst werden, welche diese Informationen an eine zentrale Recheneinheit übermitteln, wobei die zentrale Recheneinheit die Informationen in die digitale Parkraumkarte aufnimmt. Die erfassten und übermittelten Informationen umfassen insbesondere eine jeweilige erwartete Länge und Koordinaten von nicht zum Parken zur Verfügung stehenden Flächen. Damit wird die digitale Karte ständig aktuell gehalten. Die parkplatzausforschenden Fahrzeuge können dabei gleichzeitig parkplatzsuchende Fahrzeuge sein und neben Informationen über die Länge und Position von nicht zum Parken zur Verfügung stehenden Flächen auch aktuelle Informationen über freie und belegte Parkplätze erfassen und an die zentrale Recheneinheit übermitteln. Diese Informationen können dann wiederrum anderen parkplatzsuchenden Fahrzeugen zur Verfügung gestellt werden.

Nach einem weiteren Aspekt der Erfindung wird ein Parkleitsystem zur Navigation eines parkplatzsuchenden Fahrzeugs zu einem freien Parkplatz vorgeschlagen, wobei das Parkleitsystem ausgebildet ist, ein wie oben ausgebildetes Verfahren zur Erkennung von falsch geparkten Fahrzeugen auszuführen.

### Kurze Beschreibung der Zeichnungen

Figur 1 Parkleitsystem welches das erfindungsgemäße Verfahren zur Erkennung von Falschfahrern implementiert.
Figur 2 zeigt eine Beispielsszene, bei der eine freie, nicht zum Parken zur Verfügung stehende Fläche erkannt wird.
Figur 3 zeigt eine Beispielsszene, bei der die nicht zum Parken zur Verfügung stehende Fläche aus Figur 2 durch ein falsch parkendes Fahrzeug belegt ist.
Figur 4 zeigt eine Auftragung von gemessenen Längen und zugehörigen GPS-Koordinaten.

### Ausführungen der Erfindung

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente gegebenenfalls verzichtet wird. Die Figuren stellen den Gegenstand der Erfindung nur schematisch dar.

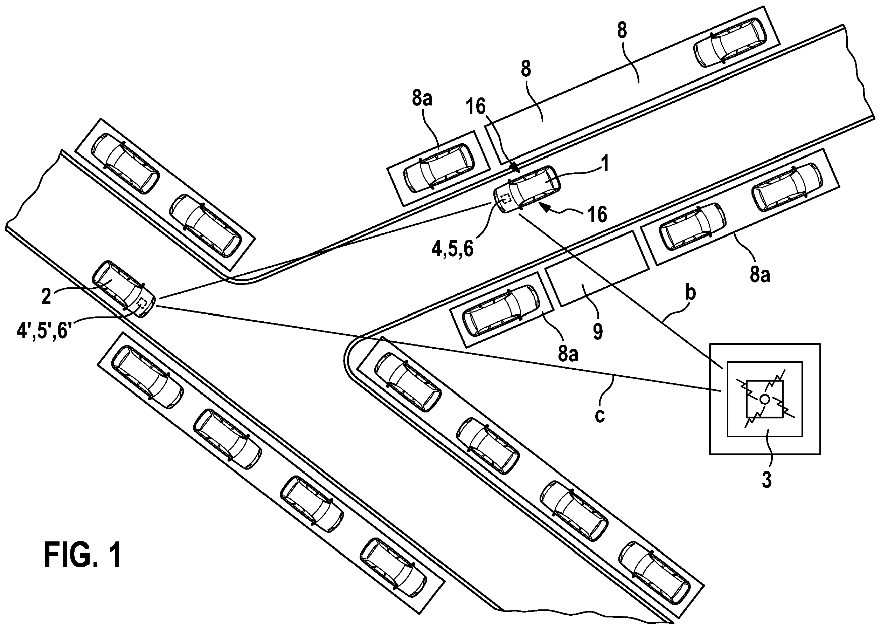

In Figur 1 ist ein Parkleitsystem welches das erfindungsgemäße Verfahren zur Erkennung von Falschfahrern implementiert, aufgezeigt, wobei mit dem Bezugszeichen 1 ein parkplatzausforschendes Fahrzeug und mit dem Bezugszeichen 2 ein parkplatzsuchendes Fahrzeug gekennzeichnet sind. Die parkplatzausforschenden Fahrzeuge 1 sind mit einer Positionsbestimmungseinrichtung, wie einem GPS (Global Positioning System) - Gerät bzw. einem Navigationssystem 4, ausgestattet, um so die Orts- bzw. Positionsdaten (Koordinaten) von freien Parkplätzen 8, belegten Parkplätzen 8a und nicht zum Parken zur Verfügung stehende Flächen 9 bestimmen zu können. Weiterhin sind die parkplatzausforschenden Fahrzeuge 1 mit einer Umfeldsensorik ausgestattet, mittels derer die Länge eines freien Parkplatzes oder einer nicht zum Parken zur Verfügung stehende Flächen 9 bestimmt werden kann. Über eine Kommunikationseinrichtung 5, zum Beispiel in Form einer Sende- und Empfangseinheit, erfolgt dann die Weiterleitung dieser Informationen an eine zentrale Recheneinheit 3. Eine nicht zum Parken zur Verfügung stehende Flächen 9 wird beispielsweise dann als solche erkannt, wenn trotz mehrmaligem Vorbeifahren eines parkplatzausforschenden Fahrzeugs 2 zu unterschiedlichen Zeiten, die Fläche nicht als belegt erkannt wird. Alternativ oder zusätzlich können Informationen über die Positionen von nicht zum Parken zur Verfügung stehenden Flächen 9 auch von externen Stellen, wie z.B. einer Stadtverwaltung bereitgestellt werden. Es ist auch denkbar, dass bestimmte Flächen nur zu bestimmten Uhrzeiten als nicht zum Parken zur Verfügung stehende Flächen 9 klassifiziert sind.

Die parkplatzausforschenden Fahrzeuge 1 kombiniert mit ihrem Navigationssystem 4 und der Kommunikationseinrichtung 5 fungieren somit als einzelne Sensoren 16, welche freie Parkplätze 8, belegte Parkplätze 8a und nicht zum Parken zur Verfügung stehende Flächen 9 im Vorbeifahren erkennen und vermessen können. Eine Verarbeitungseinrichtung 6 im Fahrzeug 1 steuert dieses Verfahren und löst zum Beispiel bei erkanntem freiem Parkplatz 8 die Übermittlung der Positionsdaten mittels der Kommunikationseinrichtung 5 aus. Die Funktionen von Navigationssystem 4, Kommunikationseinrichtung 5 und Verarbeitungseinrichtung 6 sind vorzugsweise in einer einzigen, im Folgenden als Detektiereinheit bezeichneten Einheit oder Einrichtung zusammengefasst.

Die zentrale Recheneinheit fasst die an sie von den parkplatzausforschenden Fahrzeugen 1 übermittelten Informationen über freie Parkplätze 8, belegte Parkplätze 8a und nicht zum Parken zur Verfügung stehende Flächen 9 in einer digitalen Karte zusammen.

Die parkplatzsuchenden Fahrzeuge 2 weisen ebenfalls ein Navigationssystem 4', eine Kommunikationseinrichtung 5' und eine Verarbeitungseinrichtung 6' auf, die vorzugsweise ebenfalls in einer einzigen, im Folgenden als Navigationseinheit bezeichneten Einheit oder Einrichtung zusammengefasst sind.

Selbstverständlich können die Detektiereinheit und die Navigationseinheit bei einem Fahrzeug funktionell zu einer einzigen Einheit zusammengefasst sein. So kann dieses Fahrzeug während der Fahrt einerseits als Sensor 16 für freie Parkplätze dienen und dies entsprechend weiterleiten. Andererseits kann für den Fall das ein Parkplatz gesucht wird, durch entsprechendes Betätigen der Navigationseinheit die Abfrage der Information über freie Parkplätze in der Nähe erfolgen, um dann die entsprechende Navigation zu dem freien Parkplatz einleiten zu können.

Die Erkennung und Vermessung, insbesondere die Detektion der Koordinaten und der Länge eines freien Parkplatzes 8, eines belegten Parkplatzes 8a oder einer nicht zum Parken zur Verfügung stehenden Flächen 9 mittels des parkplatzausforschenden Fahrzeugs 1 kann über zumindest einen Sensor 16 auf optischer Basis, beispielsweise mit einer am Fahrzeug 1 montierten Kamera, und/oder nichtoptischer Basis, beispielsweise durch Ultraschallsensorik, erfolgen.

Die digitale Parkraumkarte oder ein Extrakt hiervon kann von der zentralen Recheneinheit anderen, parkplatzsuchenden Fahrzeugen 2 zur Parkplatznavigation mittels einer Luftschnittstelle, wie GSM (Global System for Mobile Communication als Standard für digitale mobile Kommunikation), WLAN (Wireless Local Area Networt: Drahtloses Funknetz, beispielsweise IEEE 802.11g) oder dergleichen, übermittelt werden. Das Fahrzeug 1 ermittelt im Vorbeifahren mit seinem zumindest einen Sensor 16 rechts und gegebenenfalls auch links die freien Parkplätze 8. Diese Informationen werden zusammen mit der aktuellen Position mit einem Zeitstempel versehen und an die zentrale Recheneinheit übermittelt, wo die Informationen in die digitale Parkraumkarte integriert werden. Ein weiteres Fahrzeug 2 kann diese Information über die zentrale Recheneinheit 3 über einen Kanal (c) erhalten.

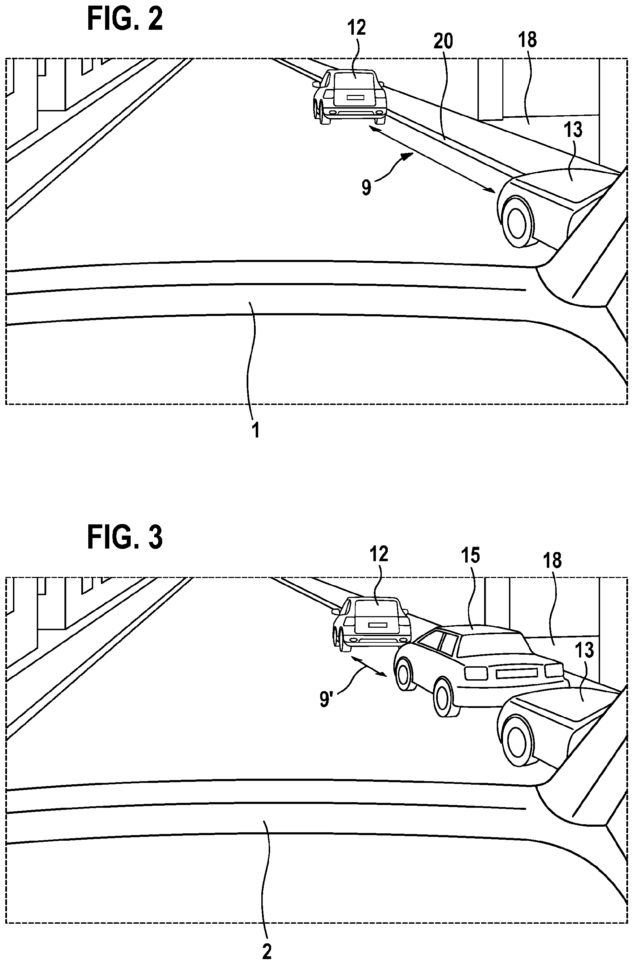

Die Erkennung eines falsch parkenden Fahrzeugs gemäß der Erfindung wird nun in Bezug auf die Figuren 2 bis 4 beispielhaft näher beschrieben.

Als erstes Beispiel sei die Situation in Figur 2 aufgeführt. Hier ist auf der rechten Seite eine Hofeinfahrt 18 zu erkennen und des Weiteren zwei parkende Fahrzeuge 12, 13, die auf der zur Hofeinfahrt angrenzenden Parkfläche 8a stehen. Beispielhaft sei zwischen den parkenden Fahrzeugen 12 und 13 eine Länge der nicht zum Parken zur Verfügung stehenden Fläche 9 von acht Metern angenommen. Fährt nun mehrfach ein ausforschendes Fahrzeug 1 mit einem distanzbasierten Messverfahren an dieser Szene vorbei und misst bei jeder Vorbeifahrt die Länge der Fläche 9 zwischen den parkenden Fahrzeugen 12 und 13 aus, so ergeben sich gemessene Längen von 8m +/- einer Varianz, welche durch die Ungenauigkeit der Detektionssensorik und dem unterschiedlichen Parkverhalten von Personen hervorgerufen wird. Auch die erfasste Position der Fläche, also die GPS-Koordinaten, ist in der Regel ebenfalls mit einer Messungenauigkeit behaftet, die aus der GPS-Positionsungenauigkeit des Fahrzeugs resultiert.

Des Weiteren ist aus den Messwerten ermittelbar, dass in dieser Szene kein hoher Bordstein 20 vorliegt, der die Fläche 9 begrenzt. In der dazugehörigen Parkraumkarte wird der gezeigte Bereich der Fläche 9 nun in digitaler Form als Nicht-Parkfläche gelernt und abgelegt, wobei die Länge der Fläche 9 mit 8 Metern +/- Varianz abgelegt wird.

Verändert sich nun die Szene, wie in Figur 3 dargestellt, und es befindet sich ein Falschparker 15 vor der Hofeinfahrt, so werden deutlich kürzere Längen 9' zwischen dem Falschparker-Fahrzeug 15 und dem davor parkenden Fahrzeug 12 von einem parkplatzsuchenden Fahrzeug 2 gemessen. Außer der deutlich geringeren Länge 9' wird weiterhin durch die Detektionssensorik des Fahrzeugs 2 erkannt, dass weiterhin kein hoher Bordstein vorhanden ist.

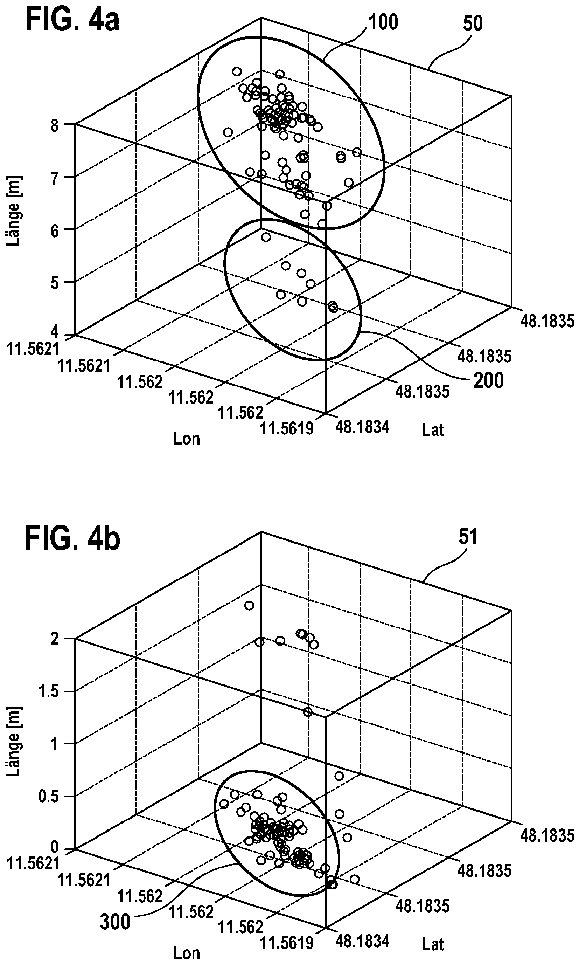

In Figur 4a ist ein Koordinatensystem 50 in dem für eine Mehrzahl von Messungen durch an der Hofeinfahrt aus Figur 2 vorbeifahrende ausforschende Fahrzeuge 1 die Länge der jeweils detektierten Lücke über die GPS-Koordinate (GPS Longitude und GPS-Latitude) aufgetragen ist. Es sind zwei Häufungen von Punkten zu erkennen. Die große Häufung an Punkten 100 sind die Messwerte aus der Situation ohne Falschparker (Figur 2). Die Längenwerte liegen alle im Bereich von 8 Metern (dies entspricht dem erwarteten Wert gemäß der Parkraumkarte). Die kleinere Häufung an Punkten 200 sind die Messwerte von der Situation mit Falschparker. Die gemessenen Längenwerte liegen alle im Bereich von ca. 5 Metern. Beide Häufungen sind klar voneinander trennbar.

Das Verfahren für die Erkennung von Falschparkern vergleicht also gemessene Längenwerte mit der aus der Parkraumkarte gelernten und damit erwarteten Länge. Wenn nun eine bestimmte Anzahl x an Messwerten vorhanden sind, die kleiner sind als die gelernte Länge abzüglich eines Offsets, dann wird erfindungsgemäß auf einen Falschparker geschlossen. Der Offsetwert ist bevorzugt größer gewählt, als die Messungenauigkeit der verwendeten Detektionssensorik, als auch größer als die erwartete Streuung der Messwerte, die aus dem üblicherweise leicht unterschiedlichen Fahr- bzw. Parkverhalten von unterschiedlichen Personen resultiert. Bevorzugt ist ein Offsetwert von größer als 3 Metern zu wählen. Je höher der Offsetwert desto eindeutiger ist die Trennung zwischen den Häufungen möglich. Die Anzahl x sollte bevorzugt mindestens einen Wert von x = 2 Messungen haben, da es sich ansonsten beispielsweise auch nur um ein Fahrzeug handeln könnte, welches während einer Messung gerade aus der Hofeinfahrt heraus fährt. Für eine höhere Verlässlichkeit können weiterhin zusätzliche Eigenschaften der Messwerte der kleinen Häufung 200 mit den Werten der großen Häufungen 100 verglichen werden, beispielsweise um zu verifizieren, ob es sich um die gleiche Situation handelt und keinen Fehler bei der GPS-Messung. Wenn z.B. bei den Messungen, die einem Falschparker zugeordnet werden, auch kein hoher Bordstein erkannt wurde, so ist die Sicherheit höher, dass es sich hier um die gleiche Szene handelt und nicht um eine geografisch nahegelegene, andere Szene.

Insgesamt klassifiziert man also die Situation "Falschparker" mithilfe von mindestens x = 2 Messungen basierend auf einer vorher gelernten erwarteten Länge einer Parkverbotszone an einer bestimmten, durch GPS-Koordinaten identifizierten Stelle. Die Informationen über die erwarteten Längen und zugeordneten Koordinaten der Parkverbotszonen werden hierbei aus einer digitalen Parkraumkarte entnommen.

In einer alternativen Situation, wird bei plausibler Vorbeifahrt an einer Nicht-Parkfläche keine Lücke an der erwarteter Stelle detektiert:
Angenommen es liegt eine ähnliche Situation vor, wie die in Bezug auf die Figuren 2 und 3 beschriebene, nur dass die Hofeinfahrt lediglich geringfügig länger als eine typische Fahrzeuglänge ist, beispielsweise 5 Meter. Wenn sich in diesem Fall ein Falschparker 15 in die Lücke vor der Hofeinfahrt stellt, dann ist die Distanz zwischen den parkenden Fahrzeugen zu klein um detektiert zu werden. Der Falschparker 15 wird in diesem Fall trotzdem erkannt, da an der erwarteten Stelle keine Lückendetektion stattfindet. Dafür wird bevorzugt zunächst plausibilisiert, ob bei der Vorbeifahrt des messenden Fahrzeugs die in der Szene vorhandenen Objekte innerhalb der Sensorreichweite dₘₐₓ liegen (und damit vorm Sensor "gesehen" wurden) und auch sonstige Grenzwerte des Parklückensuchalgorithmus eingehalten werden, wie z.B. eine maximale Fahrgeschwindigkeit vₘₐₓ. D.h. beispielsweise bei einer Vorbeifahrt an der nicht zum Parken zur Verfügung stehenden Fläche 9 mit erkannten Objekten in einer Entfernung d<dₘₐₓ (z.B. 2,5m) und bei einer Fahrgeschwindigkeit v<vₘₐₓ (z.B. 55 km/h) und keiner Detektion einer Lücke an der erwarteten Stelle, kann auf ein falsch geparktes Fahrzeug 15 geschlossen werden. Auch in diesem Beispiel gilt, dass der Falschparker 15 bevorzugt durch mindestens zwei Messungen verifiziert werden sollte, um eine ausreichende Genauigkeit zu gewährleisten. Die Position (GPS-Koordinaten) der erwarteten Lücke wird auch in diesem Beispiel aus der digitalen Parkraumkarte entnommen. Eine entsprechende Auftragung der Messwerte in einem Koordinatensystem 51 ist in Figur 4b dargestellt. Hier ist im Bereich der Position (repräsentiert durch GPS Longitude und GPS-Latitude) eine Häufung 300 von gemessenen Längenwerten von Null oder nahe Null erkennbar. Daraus wird auf ein falsch parkendes Fahrzeug geschlossen.

## Patentansprüche

1. Verfahren zur Erkennung von falsch geparkten Fahrzeugen (15), wobei Informationen über verfügbare Parkflächen (8, 8a) und nicht zum Parken zur Verfügung stehende Flächen (9) in Form einer digitalen Parkraumkarte zur Verfügung gestellt werden, wobei eine Information über eine nicht zum Parken zur Verfügung stehende Fläche (9) Koordinaten, insbesondere GPS-Koordinaten, und eine erwartete Länge der Fläche (9) umfassen, **dadurch gekennzeichnet, dass** eine Länge einer nicht zum Parken zur Verfügung stehende Flächen (9) durch ein parkplatzsuchendes Fahrzeug (2) detektiert wird und bei einer Abweichung der detektierten Länge von einer erwarteten Länge ein falsch parkendes Fahrzeug (15) erkannt wird.

2. Verfahren nach Anspruch 1, **dadurch gekennzeichnet, dass** jeder nicht zum Parken zur Verfügung stehende Fläche (9) jeweils ein Mittelwert und ein Offset der erwarteten Länge zugeordnet werden.

3. Verfahren nach Anspruch 2, **dadurch gekennzeichnet, dass** ein falsch geparktes Fahrzeug (15) erkannt wird, wenn mindestens ein parkplatzsuchendes Fahrzeug (2) bei mindestens einer Vorbeifahrt, insbesondere bei mehreren Vorbeifahrten, an einer nicht zum Parken zur Verfügung stehenden Fläche (9) eine kürzere Länge als der zugeordnete Mittelwert der erwarteten Länge abzüglich des Offsets detektiert.

4. Verfahren nach Anspruch 3, **dadurch gekennzeichnet, dass** ein falsch geparktes Fahrzeug (15) erkannt wird, wenn mindestens zwei parkplatzsuchende Fahrzeuge (2) unabhängig voneinander bei einer Vorbeifahrt an der nicht zum Parken zur Verfügung stehenden Fläche (9) eine kürzere Länge als der zugeordnete Mittelwert der erwarteten Länge abzüglich des Offsets detektieren.

5. Verfahren nach einem der Ansprüche 1 bis 4, **dadurch gekennzeichnet, dass** ein falsch geparktes Fahrzeug (15) erkannt wird, wenn ein parkplatzsuchendes Fahrzeug (2) bei einer Vorbeifahrt an einer nicht zum Parken zur Verfügung stehenden Fläche (9) keine Lücke detektiert.

6. Verfahren nach einem der Ansprüche 1 bis 5, **dadurch gekennzeichnet, dass** nach der Erkennung eines falsch geparkten Fahrzeugs (15) eine Meldung von dem parkplatzsuchenden Fahrzeug (2) an eine zentrale Recheneinheit (3) und/oder an ein Ordnungsamt, wobei zumindest die Koordinaten der belegten, nicht zum Parken zur Verfügung stehende Fläche (9) übermittelt werden.

7. Verfahren nach einem der Ansprüche 1 bis 6, **dadurch gekennzeichnet, dass** eine Warnung an den Fahrer des parkplatzsuchenden Fahrzeugs (2) ausgegeben wird, wenn das Fahrzeug (2) auf einer nicht zum Parken zur Verfügung stehende Fläche (9) geparkt wird.

8. Verfahren nach einem der Ansprüche 1 bis 7, **dadurch gekennzeichnet, dass** die digitale Parkraumkarte Informationen, umfasst, die durch im Verkehr befindliche parkplatzausforschende Fahrzeuge (1) erfasst werden, welche diese Informationen an eine zentrale Recheneinheit (3) übermitteln, wobei die zentrale Recheneinheit (3) die Informationen in die digitale Parkraumkarte aufnimmt, wobei die Informationen insbesondere eine jeweilige erwartete Länge und Koordinaten von nicht zum Parken zur Verfügung stehenden Flächen (9) umfasst.

9. Parkleitsystem zur Navigation eines parkplatzsuchenden Fahrzeugs (2) zu einem freien Parkplatz (8), wobei das Parkleitsystem ausgebildet ist, ein Verfahren zur Erkennung von falsch geparkten Fahrzeugen (15) nach einem der Ansprüche 1 bis 8 auszuführen.

## Claims

1. Method for detecting incorrectly parked vehicles (15), wherein information about available parking areas (8, 8a) and areas (9) which are not available for parking is made available in the form of a digital parking space map, wherein information about an area (9) which is not available for parking comprises coordinates, in particular GPS coordinates, and an expected length of the area (9), **characterized in that** a length of an area (9) which is not available for parking is detected by a vehicle (2) which is searching for a parking space, and when there is a deviation between the detected length and an expected length an incorrectly parked vehicle (15) is detected.

2. Method according to Claim 1, **characterized in that** each area (9) which is not available for parking is respectively assigned a mean value and an offset of the expected length.

3. Method according to Claim 2, **characterized in that** an incorrectly parked vehicle (15) is detected if at least one vehicle (2) which is searching for a space detects, as it drives at least once, in particular a plurality of times, past an area (9) which is not available for parking, a shorter length than the assigned mean value of the expected length minus the offset.

4. Method according to Claim 3, **characterized in that** an incorrectly parked vehicle (15) is detected if at least two vehicles (2) which are searching for a parking space detect, independently of one another, as they drive past the area (9) which is not available for parking, a shorter length than the assigned mean value of the expected length minus the offset.

5. Method according to one of Claims 1 to 4, **characterized in that** an incorrectly parked vehicle (15) is detected if a vehicle (2) which is searching for a parking space does not detect a space as it drives past an area (9) which is not available for parking.

6. Method according to one of Claims 1 to 5, **characterized in that** after the detection of an incorrectly parked vehicle (15), a message from the vehicle (2) which is searching for a parking space to a central processing unit (3) and/or to a public order office, wherein at least the coordinates of the occupied area (9) which is not available for parking are communicated.

7. Method according to one of Claims 1 to 6, **characterized in that** a warning is output to the driver of the vehicle (2) which is searching for a parking vehicle if the vehicle (2) is parked on an area (9) which is not available for parking.

8. Method according to one of Claims 1 to 7, **characterized in that** the digital parking space map comprises information which is acquired by vehicles (1) which are in the traffic, and are searching for a parking space and are communicating this information to a central processor unit (3), wherein the central processor unit (3) records the information in the digital parking space map, wherein the information comprises, in particular, a respective expected length and coordinates of areas (9) which are not available for parking.

9. Parking control system for navigating a vehicle (2) which is searching for a parking space to a free parking space (8), wherein the parking control system is designed to carry out a method for detecting incorrectly parked vehicles (15) according to one of Claims 1 to 8.

## Revendications

1. Procédé de détection de véhicules (15) mal stationnés, dans lequel des informations relatives à des aires de stationnement disponibles (8, 8a) et à des aires (9) non prévues pour le stationnement sont fournies sous la forme d'une carte numérique d'espaces de stationnement, dans lequel les informations relatives à une aire (9) non prévue pour le stationnement comprennent des coordonnées, notamment des coordonnées GPS, et une longueur attendue de l'aire (9), **caractérisé en ce qu'**une longueur d'une aire (9) non prévue pour le stationnement est détectée par un véhicule (2) en recherche d'une place de stationnement et, en présence d'un écart entre la longueur détectée et une longueur attendue, un véhicule (15) mal stationné est détecté.

2. Procédé selon la revendication 1, **caractérisé en ce qu'**une valeur moyenne et un décalage de la longueur attendue sont respectivement associés à chaque aire (9) non prévue pour le stationnement.

3. Procédé selon la revendication 2, **caractérisé en ce qu'**un véhicule (15) mal stationné est détecté lorsqu'au moins un véhicule (2) en recherche d'une place de stationnement, lors d'au moins un passage, notamment lors de plusieurs passages, devant une aire (9) non prévue pour le stationnement, détecte une longueur inférieure à la valeur moyenne associée de la longueur attendue moins le décalage.

4. Procédé selon la revendication 3, **caractérisé en ce qu'**un véhicule (15) mal stationné est détecté lorsqu'au moins deux véhicules (2) en recherche de places de stationnement indépendamment les uns des autres, lors d'un passage devant l'aire (9) non prévue pour le stationnement, détectent une longueur inférieure à la valeur moyenne associée de la longueur attendue moins le décalage.

5. Procédé selon l'une des revendications 1 à 4, **caractérisé en ce qu'**un véhicule (15) mal stationné est détecté lorsqu'un véhicule (2) en recherche d'une place de stationnement ne détecte pas d'espace lors d'un passage devant une aire (9) non prévue pour le stationnement.

6. Procédé selon l'une des revendications 1 à 5, **caractérisé en ce qu'**après la détection d'un véhicule (15) mal stationné, un message par le véhicule (2) en recherche d'une place de stationnement à une unité informatique centrale (3) et/ou à un bureau administratif, dans lequel au moins les coordonnées de l'aire (9) occupée, non prévue pour le stationnement sont transmises.

7. Procédé selon l'une des revendications 1 à 6, **caractérisé en ce qu'**un avertissement est envoyé au conducteur du véhicule (2) en recherche d'une place de stationnement lorsque le véhicule (2) est stationné sur une aire (9) non prévue pour le stationnement.

8. Procédé selon l'une des revendications 1 à 7, **caractérisé en ce que** la carte numérique d'espaces de stationnement comprend des informations détectées par des véhicules de recherche de places de stationnement (1) en circulation qui transmettent lesdites informations à une unité informatique centrale (3), dans lequel l'unité informatique centrale (3) reçoit les informations contenues dans la carte numérique d'espaces de stationnement, dans lequel les informations comprennent notamment une longueur respective attendue et des coordonnées d'aires (9) non prévues pour le stationnement.

9. Système de guidage de stationnement pour la navigation d'un véhicule (2) en recherche d'une place de stationnement vers une place de stationnement libre (8), dans lequel le système de guidage de stationnement est conçu pour mettre en oeuvre un procédé de détection de véhicules (15) mal stationnés selon l'une des revendications 1 à 8.
